# EUROPEAN PATENT APPLICATION

(11) **EP 4 458 684 A1**
(43) Date of publication of application: **06.11.2024**
(21) Application number: 23171394.2
(22) Date of filing: 03.05.2023
(51) Int. Cl.: B64D 47/02

(54) **EXTERIOR AIRCRAFT LIGHT, AIRCRAFT COMPRISING AN EXTERIOR AIRCRAFT LIGHT, AND METHOD OF MANUFACTURING AN EXTERIOR AIRCRAFT LIGHT**

(71) Applicant: Goodrich Lighting Systems GmbH & Co. KG, 59557 Lippstadt (DE)
(72) Inventor: DEPTA, Marion, 59555 Lippstadt (DE); JHA, Anil Kumar, 59555 Lippstadt (DE); PAWLICZEK, Carsten, 59556 Lippstadt (DE)
(74) Representative: Schmitt-Nilson Schraud Waibel Wohlfrom Patentanwälte Partnerschaft mbB

(57) **Abstract**

An exterior aircraft light (2) comprise at least one light emission assembly (4) that includes at least one light source (6); a cup-shaped reflector (8); and a light trans - missive cover (10) for the cup-shaped reflector (8). The at least one light source (6) is arranged at a bottom portion (8a) of the cup-shaped reflector (8) and a light output opening (9) is provided at a top portion (8b) of the cup-shaped reflector (8). The light transmissive cover (10) comprises a lid portion (12), extending across the light output opening (9) of the cup-shaped reflector (8); and a column-shaped light collimating portion (14), extending from the lid portion (12) into the cup-shaped reflector (8) towards the at least on light source (6) and comprising a light collimation surface (19) facing the at least one light source (6). The lid portion (12) comprises, on at least one side thereof, a light dispersing profile (13). An exterior aircraft light output of the exterior aircraft light (2) comprises light, emitted by the at least one light source (6), collimated by the cup-shaped reflector (8) and the column-shaped light collimating portion (14), and dispersed by the light dispersing profile (13).

## Description

The present invention relates to aircraft lighting. In particular, the present inven - tion relates to an exterior aircraft light. The present invention further relates to an aircraft comprising such an exterior aircraft light and to a method for manufactur - ing an exterior aircraft light.

Almost all aircraft are equipped with numerous lights, including exterior aircraft lights and interior aircraft lights. In particular, large passenger air planes are pro - vided with a wide variety of exterior and interior aircraft lights.

Exterior aircraft lights are employed for a wide variety of different purposes, such as for allowing the passengers and/or air crew to view the outside, for passive vis - ibility, for signaling purposes, etc. Examples of such exterior aircraft lights are navigation lights, also referred to as position lights, red-flashing beacon lights, white strobe anti-collision lights, wing scan lights, take-off lights, landing lights, taxi lights, runway turn-off lights, etc.

For generating a desired light output, an exterior aircraft light may comprise at least one light source and at least one optical element, such as a lens and/or a reflector, for collimating and/or dispersing the light emitted by the at least one light source. Installing and reliably supporting the at least one optical element optical element in its dedicated position with respect to the at least one light source is challenging in the demanding environment of an exterior aircraft light. Also, large cost may be associated with manufacturing the respective exterior aircraft light, in order to provide safe, reliable and regulation-compliant operation.

It would therefore be beneficial to provide an exterior aircraft light that allows for a particularly simple installation and mechanical support of at least one optical ele - ment of the exterior aircraft light.

Exemplary embodiments of the invention include an exterior aircraft light that comprises at least one light emission assembly, wherein each of the at least one light emission assembly includes: at least one light source; a cup-shaped reflector; and a light transmissive cover for covering an opening of the cup-shaped re - flector. The at least one light source is arranged at a bottom portion of the cup-shaped reflector. A light output opening is provided at a top portion of the cup-shaped reflector.

The light transmissive cover comprises a lid portion and a column-shaped light collimating portion. The lid portion may be a flat lid portion. The flat lid portion extends across the light output opening of the cup-shaped reflector and comprises, on at least one side thereof, a light dispersing profile. The column-shaped light collimating portion extends from the flat lid portion into the cup-shaped reflector towards the at least on light source and comprises a light collimation surface fac - ing the at least one light source. The column-shaped light collimating portion may extend substantially along a central axis. The flat lid portion may have its main plane of extension substantially orthogonal to the central axis.

In operation, the light emission assembly generates a light output from light that is emitted by the at least one light source, collimated by the cup-shaped reflector and the column-shaped light collimating portion, and dispersed by the light dis - persing profile.

In other words, in a light emission assembly according to an exemplary embodiment of the invention, the at least one light source, the cup-shaped reflector, the column-shaped light collimating portion, and the light dispersing profile are ar - ranged so that the light that is emitted by the at least one light source is colli - mated by the cup-shaped reflector and the column-shaped light collimating por - tion and dispersed by the light dispersing profile.

The light output(s) of the at least one light emission assembly may form the total light output of the exterior aircraft light. It is also possible that the light output(s) of the at least one light emission assembly contribute to the total light output of the exterior aircraft light, with another portion of the total light output coming from one or more light emission assemblies having a different design / set-up.

In a light emission assembly according to an exemplary embodiment of the invention, the column-shaped light collimating portion and the light dispersing profile are both integrated into the light transmissive cover. In consequence, the spatial position of the column-shaped light collimating portion with respect to the light dispersing profile is fixed and well defined. Also, by being integrated with the lid structure for the cup-shaped reflector, the spatial positions of the column-shaped light collimating portion and the light dispersing profile are fixed and well defined with respect to the cup-shaped reflector and the at least one light source. No ad - ditional support elements are necessary for supporting the column-shaped light collimating portion and/or the light dispersing profile. As a result, an exterior air - craft light according to an exemplary embodiment of the present invention may have less weight and may be assembled more easily than in previous approaches for exterior aircraft lights. Also, as compared to previous approaches, where addi - tional support elements were used for supporting a collimating lens within the cup-shaped reflector, no detrimental effect on the light output is created by such additional support elements. The light blocking / light altering effect of additional support elements may be eliminated. Since the spatial positions of the column-shaped light collimating portion and the light dispersing profile with respect to the at least one light source and with respect to the cup-shaped reflector are well de - fined and fixed, an exterior aircraft light according to an exemplary embodiment of the invention may further provide a predefined light output in a particularly reliable manner, even when the exterior aircraft light is subject to heavy movements / vi - brations during its operation.

In the context of the present document, the terms "bottom" and "top" are used for illustratively describing exemplary embodiments of the invention with reference to the enclosed figures. The use of the terms "bottom" and "top" does not restrict the spatial orientation of the described light emission assembly or the spatial orienta - tion of an exterior aircraft light comprising such a light emission assembly. In other words, an exterior aircraft light according to exemplary embodiments of the inven - tion may be mounted to an aircraft in any spatial orientation for generating a de - sired light output. In the context of the cup-shaped reflector, the terms "bottom" and "top" relate to the standard orientation of a cup, placed on a table.

In an embodiment, the cup-shaped reflector has a support portion for supporting the at least one light source. The support portion may in particular be arranged at the bottom portion of the cup-shaped reflector, opposite to the light output open - ing, which is provided at the top portion of the cup-shaped reflector.

In an embodiment, the cup-shaped reflector has a peripheral wall. The peripheral wall may extend around the support portion and the at least one light source. An inner surface of the peripheral wall may be at least partially reflective for reflecting light emitted by the at least one light source. It is possible that the entire inner sur - face of the peripheral wall is reflective or that only part of the inner surface of the peripheral wall is reflective. The cup-shaped reflector may be made from a reflec - tive material. It is also possible that the inner surface of the peripheral wall or part of the inner surface of the peripheral wall is coated with a reflective coating.

In an embodiment, the cup-shaped reflector is a collimating reflector. In particular, the peripheral wall may be shaped so that the cup-shaped reflector is a collimating reflector, i.e. a reflector that collimates light emitted by the at least one light source.

In an embodiment, the peripheral wall of the cup-shaped reflector has a parabolic shape. Alternatively, the peripheral wall of the cup-shaped reflector may have a spherical shape.

In an embodiment, the peripheral wall of the cup-shaped reflector is formed integrally as a single piece. The peripheral wall may be formed integrally by molding, for example by injection molding, or by extrusion.

In an embodiment, the peripheral wall of the cup-shaped reflector is assembled from multiple wall portions. The peripheral wall may in particular be assembled from multiple parabolic or spherical wall portions. In particular in case of large re - flectors, it may be beneficial to assemble the peripheral wall from multiple wall portions, which have been manufactured separately from each other.

In an embodiment, the support portion is at least partially reflective. The cup-shaped reflector may be made from a reflective material and may thus have a re - flective support portion. It is also possible that the support portion or part of the support portion is coated with a reflective coating.

In an embodiment, the cup-shaped reflector and the support portion have a rota - tional symmetry, in particular a full rotational symmetry, with respect to a common central axis. A cup-shaped reflector having a rotational symmetry may be particularly well-suited for providing a highly well-behaved light output, such as a highly even / highly symmetric light output.

In an embodiment, the at least one light source is at least one LED. LEDs may provide efficient and reliable light sources at low costs. Also, due to their small size, LEDs are particularly suitable for being integrated into a compact light emis - sion assembly.

In an embodiment, the light emission assembly comprises a single light source. The light source may be arranged on the central axis of the cup-shaped reflector. This may allow for providing a light output that has a particularly high level of rota - tional symmetry with respect to the central axis.

In an embodiment, the light emission assembly comprises a plurality of light sources. The light emission assembly may, for example, comprises two or there or four or five or six or seven or eight light sources. Providing a plurality of light sources may allow for increasing the light intensity of the light output of the light emission assembly. The plurality of light sources may include light sources emit - ting light of different colors. This may allow for the light emission assembly to se - lectively emit light of different colors by selectively activating individual one(s) of the plurality of light sources of different colors.

In an embodiment, the plurality of light sources are arranged in a configuration that has a rotational symmetry, in particular an n-fold rotational symmetry, with respect to the central axis of the cup-shaped reflector.

Two, three, four, five, six, seven, eight light sources may in particular be arranged in a two-fold, three-fold, four-fold, five-fold, six-fold, seven-fold or eight-fold rota - tional symmetry with respect to the central axis, respectively. This may allow for generating a light output light output having a two-fold, three-fold, four-fold, five-fold, six-fold, seven-fold or eight-fold rotational symmetry with respect to the cen - tral axis.

In further embodiments, the exterior aircraft light may comprise other, in particular larger, numbers of light sources. n light sources may be arranged in a configura - tion having an n-fold rotational symmetry with respect to the central axis.

In further embodiments, more than n light sources may be arranged in a configu - ration having an n-fold rotational symmetry. The light sources may, for example, be arranged along two or more concentric circles forming two or more concentric rings of light sources. It is also possible that one of the light sources is arranged at the center of a single ring or multiple concentric rings of light sources.

In an embodiment, the column-shaped light collimating portion comprises the light collimation surface and a light guide portion. The light collimation surface may also be viewed as a collimating lens. Accordingly, the collimating lens is arranged in a position in which it faces the at least one light source. The light guide may ex - tend between the light collimation surface / collimating lens and the lid portion of the light transmissive cover for guiding the light from the light collimation surface / collimating lens to the lid portion of the light transmissive cover. The light guide may be configured for guiding the light by total internal reflection. While such total internal reflection is possible, it is also possible that the light collimation surface / collimating lens achieves such a high level of collimation that most or all of the collimated light travels through the light guide portion in a substantially straight manner and does not require total internal reflection to stay within the light guide portion.

In an embodiment, the collimating lens and the light guide are formed integrally as a single piece. Providing the collimating lens and the light guide as a single piece reduces the complexity of the column-shaped light collimating portion. Also, it helps to reduce the complexity of the manufacturing and the assembly of the light emission assembly. When forming the collimating lens and the light guide integrally, the collimating lens may be conveniently provided by the terminal surface of the light guide. In other words, the light collimation surface may be the end sur - face / terminal surface of the light guide, facing the at least one light source.

In an embodiment, the column-shaped light collimating portion has rotational symmetry, in particular full rotational symmetry or an n-fold rotational symmetry, with respect to the central axis. The column-shaped light collimating portion may in particular have full rotational symmetry or a two-fold, three-fold, four-fold, five-fold, six-fold, seven-fold or eight-fold rotational symmetry with respect to the central axis. If the light emission assembly comprises a plurality of light sources, the rota - tional symmetry of the column-shaped light collimating portion with respect to the central axis may correspond to the rotational symmetry of the arrangement of the plurality of light sources. When having full rotational symmetry, the column-shaped light collimating portion may have a cylindrical shape with a circular cross-section.

In an embodiment, the light dispersing profile is configured for dispersing all light that is collimated by the cup-shaped reflector and the column-shaped light colli - mating portion. In particular, the light dispersing profile may be arranged to extend across the entire light output opening of the cup-shaped reflector. In conse - quence, all light that is output by the exterior aircraft light may be dispersed to some extent.

In another embodiment, the light dispersing profile is configured to disperse only a portion of the light that is collimated by the cup-shaped reflector and/or the col - umn-shaped light collimating portion. In other words, the lid portion may include at least one portion that does not comprise a light dispersing profile. In consequence, the light that is output by the light emission assembly may comprise a dispersed portion of light and a collimated portion of light. Such a mix of colli - mated and dispersed light may be desired in specific applications.

Dispersing all light or only a portion of the light that has been collimated by the cup-shaped reflector and the column-shaped light collimating portion allows for adapting the light output, as emitted by the light emission assembly, to the needs associated with the respective use of the exterior aircraft light.

In an embodiment, the light dispersing profile is formed on an outside surface of the light transmissive cover, i.e. on the surface of the light transmissive cover / of the lid portion facing away from the cup-shaped reflector and the at least one light source.

In an embodiment, the light dispersing profile is formed on an inside surface of the light transmissive cover, i.e. on the surface of the light transmissive cover / of the lid portion facing towards the cup-shaped reflector and the at least one light source.

In yet another embodiment, a light dispersing profile is formed on both, the inside surface and the outside surface of the light transmissive cover. In particular, a first light dispersing profile may be formed on the inside surface of the light transmis - sive cover / of the lid portion and a second light dispersing profile may be formed on the outside surface of the light transmissive cover / of the lid portion.

The surface of the light transmissive cover on which the light dispersing profile i s formed may be selected based on the intended use of the exterior aircraft light and the desired light output.

In an embodiment, the light dispersing profile comprises a corrugated / undulated surface. A corrugated / undulated surface provides for an efficient light dispersing profile and may be produced at low costs.

The corrugated / undulated surface may be formed on an outside of the lid por - tion, facing away from the at least one light source. Alternatively, the corrugated / undulated surface may be formed on an inside of the lid portion, facing towards the at least one light source. It is also possible that a corrugated / undulated sur - face is formed on both, on the inside and on the outside of the lid portion.

In an embodiment, the corrugated / undulated surface comprises a plurality of grooves formed within the lid portion and/or a plurality of ribs protruding from the lid portion.

The plurality of grooves and/or the plurality of ribs may in particular extend side-by-side across the lid portion of the light transmissive cover: The plurality of grooves and/or the plurality of ribs may form a regular pattern, which may result in a well-controlled dispersion of the light passing the lid portion of the light transmis - sive cover.

In an embodiment, the plurality of grooves have cylindrical shapes. The plurality of grooves may in particular have semi-cylindrical shapes, i.e. the shapes of half cylinders, which are cut along the longitudinal direction / along the height dimen - sion of the cylinders.

In an embodiment, the plurality of ribs have cylindrical shapes. The plurality of ribs may in particular have semi-cylindrical shapes, i.e. the shapes of half cylinders, which are cut along the longitudinal direction / along the height dimension of the cylinders.

In an embodiment, the cylindrical shapes of the grooves and/or of the ribs have a radius in the range of between 1 mm and 5 mm. The cylindrical shapes may in particular have a radius in the range of between 2 mm and 4 mm, in particular a radius of about 3 mm. Cylindrical shapes having such radii have been found to be highly efficient in providing suitably dispersed light outputs for exterior aircraft lights.

In an embodiment, the lid portion of the light transmissive cover comprises an un - dercut for accommodating a peripheral edge of the cup-shaped reflector. Such a configuration may allow for securely and easily attaching the light transmissive cover to the cup-shaped reflector by inserting the peripheral edge of the cup-shaped reflector into the undercut. It may in particular allow for attaching the light transmissive cover to the cup-shaped reflector without deteriorating the optical properties of the cup-shaped reflector or the light transmissive cover by deforming the cup-shaped reflector or the light transmissive cover. As compared to previous approaches, where the light transmissive cover was attached to the cup-shaped reflector by hook-shaped fasteners at discrete attachment points, a lower amount of mechanical stress may be imparted onto the cup-shaped reflector and the light transmissive cover. The cup-shaped reflector and the light transmissive cover may thus have a lower risk to deform in response to locally introduced stresses. As a consequence, a more well-behaved light output of the light emission assem - bly may be achieved.

In an embodiment, the lid portion of the light transmissive cover has a lip. The lip may be arranged at a circumferential edge of the lid portion of the light transmis - sive cover. For forming the undercut, the lip may be oriented at an acute angle with respect to the remainder of the lid portion of the light transmissive cover. In particular, the lip may protrude at an acute angle from the remainder of the lid portion of the light transmissive cover at the circumferential edge of the lid portion of the light transmissive cover.

The undercut / lip may provide a snap-on mechanism, providing a snap fit be - tween the undercut / lip of the light transmissive cover and a peripheral edge of the cup-shaped reflector. In this way, the light transmissive cover may be securely attached to the cup-shaped reflector, without deteriorating the optical properties of the cup-shaped reflector due to a deformation of the cup-shaped reflector.

In an embodiment, the peripheral edge of the cup-shaped reflector extends cir - cumferentially around the light output opening of the cup-shaped reflector, and the undercut / lip extends circumferentially around the lid portion of the light trans - missive cover. Such a configuration may provide for a circumferential and poten - tially rotationally symmetric snap-on mechanism, which may extend around the entire circumference of the cup-shaped reflector. Providing such a circumferential / rotationally symmetric snap-on mechanism may reliably prevent an undesirable asymmetric deformation of the cup-shaped reflector and the light transmissive cover, which might deteriorate the optical properties of the light emission assembly.

In an embodiment, the light transmissive cover is made of an elastic material. A light transmissive cover that is made of an elastic material may be attached easily to the cup-shaped reflector by elastically deforming the light transmissive cover during the assembly process. An elastic material may in particular allow for introducing the upper edge of the cup-shaped reflector easily into an undercut, formed at the outer periphery of the lid portion of the light transmissive cover, by tempo - rarily deforming the outer periphery of the lid portion.

In an embodiment, the light transmissive cover is made of a plastics material or of a rubber material. The light transmissive cover may in particular be made of silicone. Plastic materials, rubber materials and, in particular, silicone have been found to have properties that are very suitable for forming the light transmissive cover.

The light transmissive cover may be manufactured by molding, in particular by in - jection molding, or by extrusion.

In an embodiment, the exterior aircraft light comprises a plurality of light emission assemblies. The exterior aircraft light may in particular include seven light emis - sion assemblies. By providing a plurality of light emission assemblies, the light in - tensity of the light output, emitted by the exterior aircraft light, may be increased as compared to an exterior aircraft light that comprises only a single light emission assembly.

In an embodiment, the light emission assemblies are arranged in a honeycomb configuration. A honeycomb configuration may allow for a dense packing of the light emission assemblies, resulting in a compact structure of the exterior aircraft light.

In embodiments with a plurality of light emission assemblies, the light emission assemblies may all be of the same design or may be of different designs. Each of the plurality of light emission assemblies may be embodied in accordance with any of the feature combinations as described herein. The exterior aircraft light may have one or more additional light emission assemblies that is / are not em - bodied in accordance with any of the features combinations as described herein.

In an embodiment, the exterior aircraft light is one of a take-off light, a landing light, a taxi light, a runway turn-off light, a wing scan light, an engine scan light, a logo light, a cargo loading light or a multi-functional light, which combines the functionalities of at least two of a take-off light, a landing light, a taxi light, a run - way turn-off light, a wing scan light, an engine scan light, a logo light and a cargo loading light. The multi-functional light may in particular combine the functionalities of any two or three or four of a take-off light, a landing light, a taxi light, and a runway turn-off light.

Exemplary embodiments of the invention also include a method of manufacturing a light emission assembly of an exterior aircraft light, wherein the method com - prises: arranging at least one light source in a cup-shaped reflector, so that the at least one light source is arranged at a bottom portion of the cup-shaped reflector and a light output opening is provided at a top portion of the cup-shaped reflector; and attaching a light transmissive cover to the cup-shaped reflector, with a lid por - tion of the light transmissive cover extending across the light output opening of the cup-shaped reflector, wherein the light transmissive cover comprises a col - umn-shaped light collimating portion, extending from the lid portion into the cup-shaped reflector towards the at least one light source and comprising a light colli - mation surface that faces the at least one light source, and wherein the lid portion comprises, on at least one side thereof, a light dispersing profile, such that an ex - terior aircraft light output of the exterior aircraft light comprises light, emitted by the at least one light source, collimated by the cup-shaped reflector and the col - umn-shaped light collimating portion, and dispersed by the light dispersing profile. The additional features, modifications and effects, as described above with re - spect to an exterior aircraft light in accordance with exemplary embodiments of the invention, apply to the method of manufacturing a light emission assembly of an exterior aircraft light in an analogous manner.

In an embodiment, the method includes introducing a peripheral edge of the cup-shaped reflector, which is formed at the light output opening of the cup-shaped reflector, into a matching undercut formed at the lid portion of the light transmis - sive cover. The undercut may in particular be formed circumferentially around the lid portion of the light transmissive cover.

Exemplary embodiments of the invention further include an aircraft, such as an airplane or a helicopter, that is equipped with at least one exterior aircraft light ac - cording to an exemplary embodiment of the invention. The additional features, modifications and effects, as described above with respect to an exterior aircraft light and/or with respect to a method for manufacturing a light emission assembly of an exterior aircraft light in accordance with exemplary embodiments of the in - vention, apply to the aircraft in an analogous manner.

Further exemplary embodiments of the invention are described below with respect to the accompanying drawings, wherein:
Figure 1A shows a schematic top view of an aircraft according to an exemplary embodiment of the invention, which is equipped with a variety of exterior aircraft lights;
Figure 1B shows a schematic front view of the aircraft shown in Figure 1A;
Figure 2 shows a schematic top view of an exterior aircraft light according to an exemplary embodiment of the invention.
Figure 3 shows a schematic cross-sectional view of a light emission assembly of an exterior aircraft light according to an exemplary embodiment of the invention;
Figure 4 shows a perspective view of the light emission assembly shown in Figure 3.

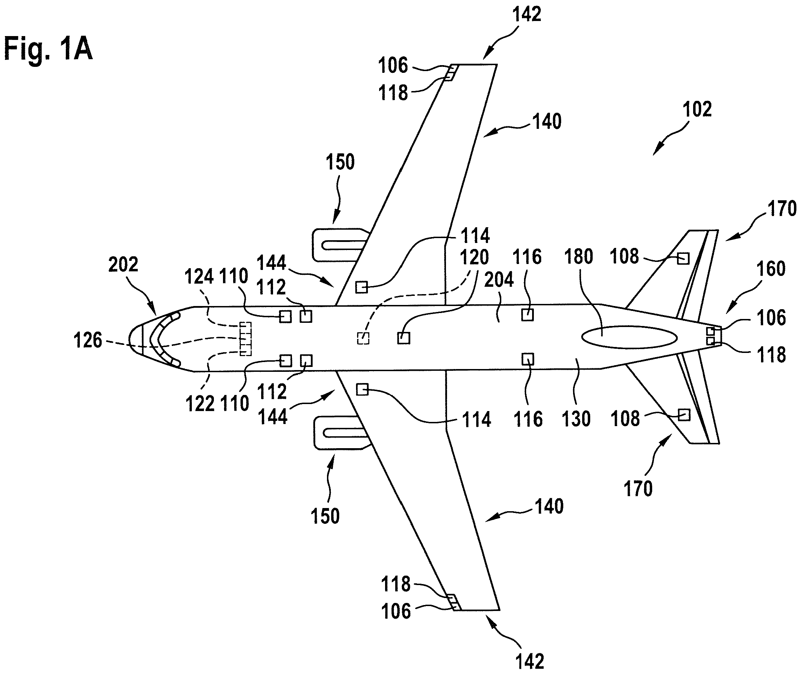

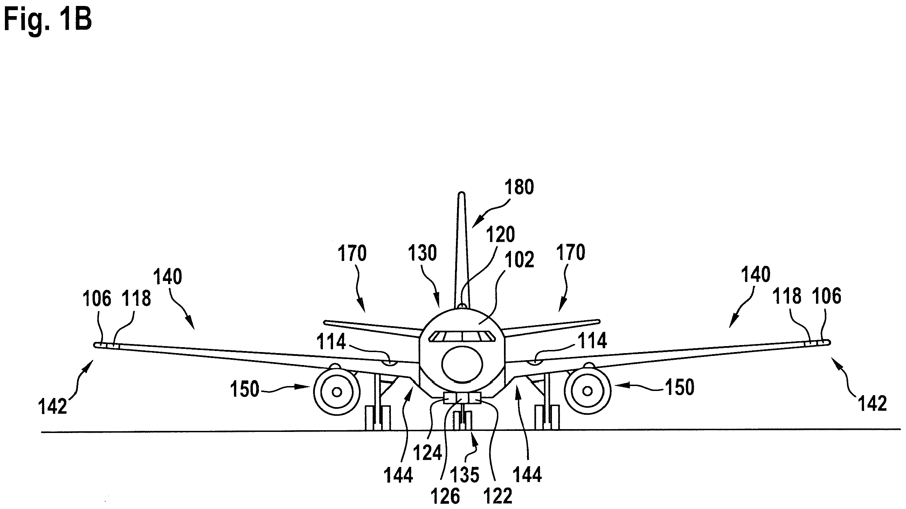

Figures 1A and 1B, jointly also referred to as Figure 1 herein, show an aircraft 102, in particular an airplane, comprising a fuselage 130, which houses a cockpit 202 and a passenger cabin 204, and two wings 140, extending from the fuselage 130. Two horizontal stabilizers 170 and a vertical stabilizer 180 extend from a rear portion of the fuselage 130. An engine 150 is mounted to each of the wings 140, respectively. The aircraft 102 is shown in a top view in Figure 1A and shown in a front view in Figure 1B.

The aircraft 102 of Figure 1 is equipped with a wide variety of exterior lights. In particular, the aircraft 102 is equipped with three navigation lights 106, two logo lights 108, two wing scan lights 110, two engine scan lights 112, two runway turn-off lights 114, two cargo loading lights 116, three white anti-collision strobe lights 118, two red-flashing anti-collision beacon lights 120, a landing light 122, a take-off light 124 and a taxi light 126. It is pointed out that these kinds of lights and their numbers are exemplary only and that the aircraft 102 may be equipped with additional lights that are not shown.

The three navigation lights 106 are positioned in the left and right wing tips 142 as well as at the tail 160 of the aircraft 102. In normal flight conditions, each one of the navigation lights 106 emits light in one of the colors green, red and white, thus indicating to the aircraft environment if they are looking at the port side, starboard side or tail side of the aircraft. The navigation lights 106 are normally on during all phases of the flight and in all flight conditions.

The logo lights 108 are directed to the vertical stabilizer 180 of the aircraft 102 and are provided for illuminating the same, in particular for illuminating the logo commonly provided on the vertical stabilizer 180. The logo lights 108 are normally switched on for the entire duration of the flight during night flights. It is also possi - ble that the logo lights are only used during taxiing on the airport and are normally switched off during the flight.

The wing scan lights 110 and the engine scan lights 112 are positioned on the left and right sides of the fuselage 130, in front of the roots 144 of the wings 140 of the aircraft 102. The wing scan lights 110 and the engine scan lights 112 are nor - mally off during the flight and may be switched on periodically or upon reasonable cause by the pilots or by the aircrew, in order to check the wings 140 and the en - gines 150 of the aircraft 102.

The runway turn-off lights 114 are positioned in the roots 144 of the wings 140. The runway turn-off lights 114 are directed forwards and are normally switched off during the flight and switched on during taxiing, at least at night.

The cargo loading lights 116 are positioned on the left and right sides of the fuse - lage 130, behind the wings 140 and in front of the tail structure of the aircraft 102. They are normally switched off during the flight of the aircraft 102.

The white anti-collision strobe lights 118 are positioned in the left and right wing tips 142 as well as at the tail 160 of the aircraft 102. The white anti-collision strobe lights 118 emit respective sequences of white light flashes during normal opera - tion of the aircraft 102. It is also possible that the white anti-collision strobe lights 118 are only operated during night and in bad weather conditions.

The red-flashing anti-collision beacon lights 120 are positioned on the top and the bottom of the fuselage 130 of the aircraft 102. They are arranged at the height of the wings in the longitudinal direction of the aircraft 102. While one of the red-flashing anti-collision beacon lights 120 is disposed on the top of the fuselage 130, the other one of the red-flashing anti-collision beacon lights 120 is disposed on the bottom of the fuselage 130 and is therefore shown in phantom in Figure 1A. The red-flashing anti-collision beacon lights 120 are normally switched on dur - ing taxiing and during take-off and landing. Their output is perceived as a se - quence of red light flashes in a given viewing direction.

In the embodiment depicted in Figure 1, the runway turn-off lights 114 are located in the wings 140, in particular in the roots 144 of the wings 140, and the landing light 122, the take-off light 124 and the taxi light 126 are mounted to the front gear 135 of the aircraft 102. The front gear 135 is stored within the fuselage 130 of the aircraft 102 during flight, and it is deployed during landing, taxiing and take off.

In alternative embodiments, which are not explicitly shown in the figures, the run - way turn-off lights 114 may be mounted to the front gear 135 and/or at least one of the landing light 122, the take-off light 124 and the taxi light 126 may be in - stalled in the wings 140, in particular in the roots 144 of the wings 140, of the air - craft 102.

The aircraft 102 may also comprise one or more multi-functional lights, which combine(s) the functionalities of at least two of a landing light, a take-off light, a taxi light, and a runway turn-off light.

Since the landing light 122, the take-off light 124, and the taxi light 126 are ar - ranged on the bottom of the aircraft 102, they are also depicted in phantom in Fig - ure 1A.

Each of these exterior aircraft lights may be an exterior aircraft light according to an exemplary embodiment of the invention. In particular, those ones of the de - picted exterior aircraft lights that have a highly targeted light output in a particular illumination direction may largely benefit from the implementation in accordance with exemplary embodiments of the invention. Exemplary embodiments of the in - vention may for example be provided for the landing light 122, the take-off light 124, the taxi light 126, the runway turn-off lights 114, the logo lights 108, the wing scan lights 110, the engine scan lights 112, and the cargo loading lights 116.

When equipped with one or more exterior aircraft lights in accordance with exem - plary embodiments of the invention,the aircraft 102 is an aircraft in accordance with an exemplary embodiment of the invention.

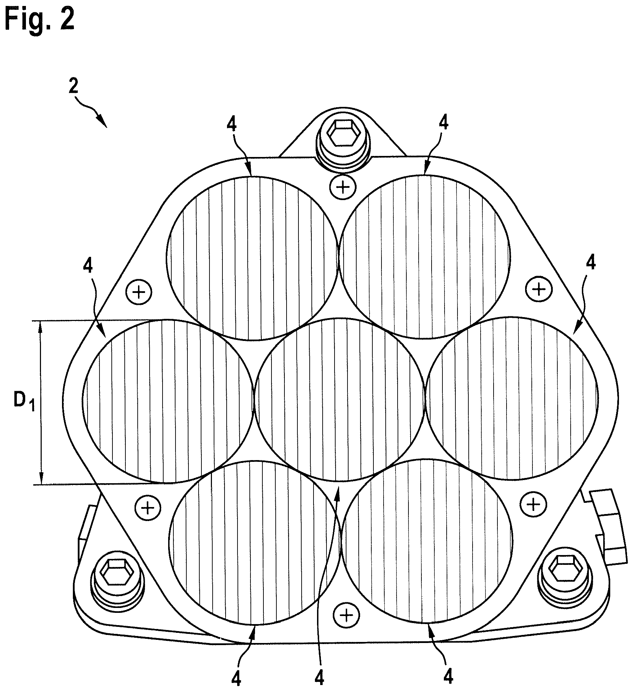

Figure 2 shows a schematic top view of an exterior aircraft light 2 according to an exemplary embodiment of the invention. The exterior aircraft light 2 comprises a plurality of light emission assemblies 4.

In the exemplary embodiment depicted in Figure 2, the exterior aircraft light 2 comprises seven light emission assemblies 4, which are arranged in a honey - comb configuration.

Each light emission assembly 4 may have a diameter D ₁ in the range of between 25 mm and 65 mm.

The configuration depicted in Figure 2 is, however, only exemplary. An exterior aircraft light 2 according to an exemplary embodiment of the invention may com - prise more or less than seven light emission assemblies 4. An exterior aircraft light 2 according to an exemplary embodiment of the invention may in particular comprise only one light emission assembly 4; and if the exterior aircraft light 2 comprises a plurality of light emission assemblies 4, the light emission assemblies 4 may be arranged in other configurations than in a honeycomb configuration.

The exterior aircraft light 2 may be a take-off light 124, a landing light 122, a taxi light 126, a runway turn-off light 114, a wing scan light 110, an engine scan light 112, a logo light 108, a cargo loading light 116, or a multi-functional light, which combines the functionalities of at least two of a take-off light 124, a landing light 122, a taxi light 126, a runway turn-off light 114, a wing scan light 110, an engine scan light 112, a logo light 108 and a cargo loading light 116. Such a multi-functional light may in particular combine the functionalities of any two or three or four of a take-off light 124, a landing light 122, a taxi light 126, and a runway turn-off light 114.

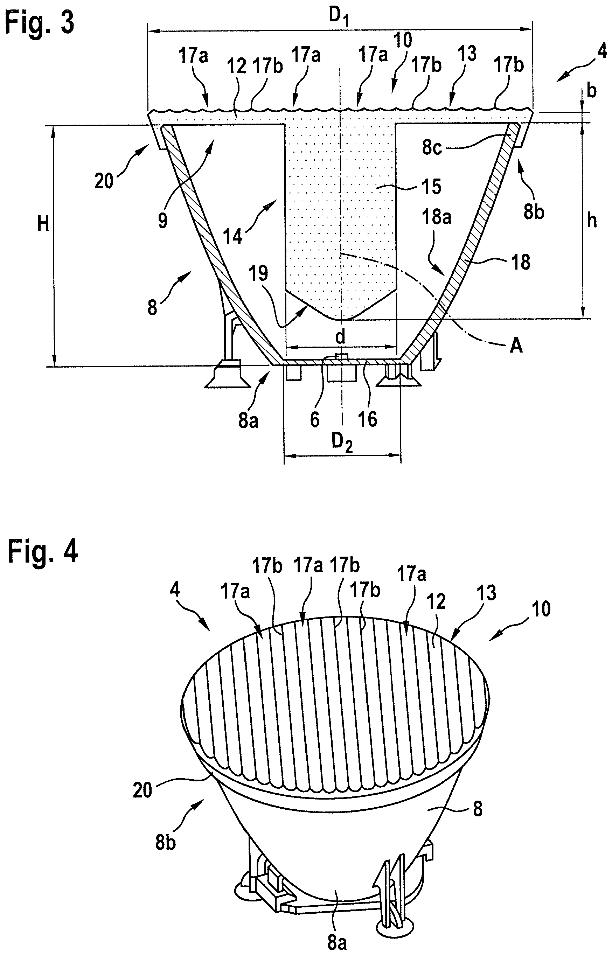

Figure 3 shows a schematic cross-sectional view of a light emission assembly 4 of an exterior aircraft light according to an exemplary embodiment of the invention. Figure 4 shows a perspective view of the light emission assembly 4 shown in Fig - ure 3. The light emission assembly 4 of Figures 3 and 4 may be one of the light emission assemblies 4 of the exterior aircraft light 2 of Figure 2. It is also possible that the light emission assembly 4 of Figures 3 and 4 is the only light emission as - sembly of an exterior aircraft light, i.e. that the full light output of the exterior air - craft light is provided by the light emission assembly 4 of Figures 3 and 4. It is fur - ther possible that an exterior aircraft light in accordance with an exemplary em - bodiment of the invention includes multiple such light emission assemblies 4 and that these multiple light emission assemblies 4 are arranged in a different configu - ration than depicted in Figure 2.

In the exemplary embodiment of Figures 3 and 4, light emission assembly 4 com - prises a light source 6, for example an LED, which is supported by a support por - tion 16.

The light emission assembly 4 further comprises a cup-shaped reflector 8. The support portion 16 is provided by a bottom portion 8a of the cup-shaped reflector 8, and the light source 6 is arranged at said bottom portion 8a of the cup-shaped reflector 8. A light output opening 9 is formed at an opposing top portion 8b of the cup-shaped reflector 8.

The support portion 16 may have a diameter D ₂ in the range of between 5 mm and 30 mm.

It is noted that the terms "bottom" and "top" refer only to the spatial orientation of the light emission assembly 4 depicted in Figures 3 and 4. The use of the terms "bottom" and "top", as used in this description, does not restrict the spatial orien - tation of the light emission assembly 4 in an exterior aircraft light 2 mounted to an aircraft 102. An exterior aircraft light 2 according to exemplary embodiments of the invention may be mounted to an aircraft 102 in any spatial orientation for gen - erating a desired light output. In the context of the cup-shaped reflector, the terms "bottom" and "top" relate to the standard orientation of a cup, placed on a table.

The cup-shaped reflector 8 may have a height H in the range of between 25 mm and 65 mm.

The cup-shaped reflector 8 has a peripheral wall 18, extending around the sup - port portion 16 and the at least one light source 6. An inner surface 18a of the pe - ripheral wall 18 is at least partially reflective for reflecting light emitted by the light source 6. The support portion 16 may be at least partially reflective as well.

For providing the desired reflective properties, the inner surface 18a of the periph - eral wall 18 and/or of the support portion 16 may be coated, at least partially, with a reflective coating. Such a reflective coating is not explicitly shown in the figures. It is also possible that the cup-shaped reflector 8 is made from a reflective mate - rial.

The cup-shaped reflector 8 is formed as a collimating reflector for collimating the light emitted by the at least one light source 6.

The peripheral wall 18 of the cup-shaped reflector 8 may have a parabolic shape. Alternatively, the peripheral wall 18 of the cup-shaped reflector 8 may have a spherical shape. The peripheral wall 18 may be formed integrally as a single piece, or it may be assembled from a plurality of wall portions, in particular from a plurality of parabolic or spherical wall portions.

The cup-shaped reflector 8 may have rotational symmetry, in particular a full rota - tional symmetry, with respect to a central axis A. The light source 6 may be arranged on the central axis A.

Instead of the single light source 6, depicted in Figure 3, the light emission as - sembly 4 may comprise a plurality of light sources 6. The plurality of light sources 6 may in particular be arranged in a configuration that is symmetric with respect to the central axis A of the cup-shaped reflector 8.

The light emission assembly 4 may, for example, comprises two, there, four, five, six, seven, eight or more light sources. The two, three, four, five, six, seven, eight light sources 6 may by arranged in a two-fold, three-fold, four-fold, five-fold, six-fold, seven-fold or eight-fold rotational symmetry with respect to the central axis A. Other, in particular larger, numbers of light sources 6 as possible as well. Also, it is possible that one of the plurality of light sources is arranged on the central axis A and that the other light sources are arranged therearound.

The light emission assembly 4 further comprises a light transmissive cover 10, which comprises a flat lid portion 12 and a column-shaped light collimating portion 14. The flat lid portion 12 extends across the light output opening 9 of the cup-shaped reflector 8. The main plane of extension of the flat lid portion 12 may be oriented substantially orthogonal to the central axis A. The column-shaped light collimating portion 14 extends from the flat lid portion 12 into the cup-shaped re - flector 8 towards the support portion 16 and, thus, towards the light source 6. The column-shaped light collimating portion 14 may extend basically along the central axis A. In the exemplary embodiment of Figure 3, the column-shaped light colli - mating portion 14 has a cylindrical shape. This cylindrical shape has a circular cross-section, with the exception of the end portion of the column-shaped light collimating portion 14 towards the light source 6, as will be described below.

The flat lid portion 12 may have a diameter D ₁ in the range of between 25 mm and 65 mm.

The flat lid portion 12 may have a thickness b in the range of between 2 mm and 5 mm, in particular a thickness b in the range of between 3 mm and 4 mm.

The column-shaped light collimating portion 14 may have a diameter d in the range of between 3 mm and 25 mm, in particular a diameter d in the range of be - tween 10 mm and 20 mm, and a height h in the range of between 15 mm and 40 mm, in particular a height h in the range of between 20 mm and 30 mm.

The column-shaped light collimating portion 14 comprises a light collimation sur - face 19, constituting a collimating lens facing the light source 6, and a column-shaped light guide 15, extending between the light collimation surface 19 and the lid portion 12 of the light transmissive cover 10. The column-shaped light collimat - ing portion 14 may have a rotational symmetry, in particular a full rotational sym - metry or an n-fold rotational symmetry, with respect to the central axis A. The light guide 15 may be configured for guiding the light by total internal reflection and/or may be configured for simply providing a traveling medium, through which the light, collimated by the light collimation surface 19, can travel in a straight line. The light may travel through the light guide 15 in a straight manner and/or via to - tal internal reflection, depending on how perfect the collimation by the light colli - mation surface 19 is.

The lid portion 12 comprises, on at least one side thereof, a light dispersing profile 13 for dispersing / scattering light that passes through the light dispersing profile 13. In the embodiment depicted in Figures 3 and 4, the light dispersing profile 13 of the lid portion 12 of the light transmissive cover 10 comprises a corrugated / undulated surface.

In the embodiment depicted in Figures 3 and 4, the light dispersing profile 13, which comprises the corrugated / undulated surface, is formed on the outside of the light transmissive cover 10, i.e. on the side facing away from the support por - tion 16 and the light source 6. Additionally or alternatively, a light dispersing pro - file 13, which may in particular comprise a corrugated / undulated surface, may be formed on the inside of the light transmissive cover 10, i.e. on the side of the lid portion 12 that faces towards the support portion 16 and the light source 6.

In the exemplary embodiment of Figures 3 and 4, the corrugated / undulated sur - face comprises a plurality of grooves 17a formed within the lid portion 12. Alterna - tively or additionally, the corrugated / undulated surface may comprise a plurality of ribs protruding from the lid portion 12. In the depicted exemplary embodiment, the tips between the plurality of grooves 17a may be seen as a plurality of ribs 17b. However, it is also possible to view the geometry of Figure 3 as an arrange - ment of a plurality of grooves 17a only, with the tips between the plurality of grooves 17a solely being seen as connection points / connection lines between the plurality of grooves 17a.

The plurality of grooves 17a may in particular extend side-by-side across the lid portion 12 of the light transmissive cover 10, as it is depicted in Figure 4.

In the exemplary embodiment depicted in Figure 2, the plurality of grooves 17a of all light emission assemblies 4 of the exterior aircraft light 2 are oriented parallel to each other.

In other embodiments of exterior aircraft lights 2 that comprise a plurality of light emission assemblies 4, the plurality of grooves 17a, formed on the light transmis - sive covers 10 of the different light emission assemblies 4, may have differing ori - entations, i.e. may not be oriented parallel to each other. The grooves 17a, formed on different light transmissive covers 10, may, for example, be oriented at an angle of 45° or at an angle of 90° with respect to each other.

The plurality of grooves 17a may have cylindrical shapes, in particular semi-cylin - drical shapes, i.e. shapes of half cylinders.

The cylindrical shapes may have a radius in the range of between 1 mm and 5 mm, in particular a radius in the range of between 2 mm and 4 mm, further in particular a radius of about 3 mm.

A light dispersing profile 13 comprising a corrugated / undulated surface, as it is depicted in Figures 3 and 4, is only an example. The lid portion 12 of the light transmissive cover 10 may be formed with other types of light dispersing profiles 13, which are capable of providing the desired dispersed light output, as well.

For example, instead of the depicted geometry with a plurality of cylindrical grooves 17a, a plurality of cylindrical ribs may be arranged side-by-side. As com - pared to the plurality of cylindrical grooves 17a depicted in Figure 3, which are concave structures when seen from the outside of the light emission assembly 4, the plurality of cylindrical ribs are convex structures when seen from outside of the light emission assembly 4. The indentations between the plurality of cylindrical ribs could then be seen solely as connection points / connection lines between the plurality of ribs. However, it is also possible that these indentations are seen as a plurality of grooves.

In the embodiment depicted in Figures 3 and 4, the lid portion 12 of the light transmissive cover 10 is formed with an undercut. The undercut is configured for accommodating an upper peripheral edge 8c of the cup-shaped reflector 8. An engagement between the undercut and the upper peripheral edge 8c may allow for fixing / attaching the light transmissive cover 10 to the cup-shaped reflector 8.

For forming the undercut, a lip 20 is formed at the outer periphery of the lid portion 12 of the light transmissive cover 10. Said lip 20 protrudes downwards from the circumferential edge of the lid portion 12 of the light transmissive cover 10 at an acute angle with respect to the remainder of the lid portion 12 of the light transmissive cover 10.

The upper peripheral edge 8c of the cup-shaped reflector 8 extends circumferen - tially around the light output opening 9 of the cup-shaped reflector 8. In an as - sembled state, the lip 20 extends circumferentially around the upper peripheral edge 8c of the cup-shaped reflector 8. In combination, the upper peripheral edge 8c and the lip 20 constitute a snap-on mechanism for securely fixing the light transmissive cover 10 to the cup-shaped reflector 8.

In the exemplary embodiment of Figures 3 and 4, the upper peripheral edge 8c of the cup-shaped reflector 8 extends around the full circumference the light output opening 9 of the cup-shaped reflector 8 and the lip 20 extends around the full cir - cumference of the lid portion 12 of the light transmissive cover 10, resulting in a fixing mechanism that has rotational symmetry, in particular full rotational symme - try, with respect to the central axis A.

As a result, only rotationally symmetric forces are exerted onto the cup-shaped re - flector 8, when the light transmissive cover 10 is mounted to the cup-shaped re - flector 8. In consequence, irregular deformations of the cup-shaped reflector 8, which could be caused by local forces generated by a more discrete / more point-based fixing mechanism and which could distort the light output of the light emis - sion assembly 4, may be prevented.

The light transmissive cover 10 may be made of an elastic material, which may al - low for temporarily deforming the light transmissive cover 10 and passing the lip 20 over the upper peripheral edge 8c of the cup-shaped reflector 8 for mounting the light transmissive cover 10 to the cup-shaped reflector 8.

The light transmissive cover 10 may in particular be made of a plastics material or of a rubber material. The light transmissive cover 10 may, for example, be made of silicone.

When the light source 6 is operated, the light emission assembly 4 generates a light output, which is emitted through the light output opening 9 of the cup-shaped reflector 8. Depending on the overall set-up of the exterior aircraft light, in particu - lar depending on the number of light emission assemblies in the exterior aircraft light, the light output of the light emission assembly 4 may provide the total light output of the exterior aircraft light or may contribute to / form part of the total light output of the exterior aircraft light.

The light output of the light emission assembly 4 comprises light that is emitted by the light source 6, collimated by the cup-shaped reflector 8 and the column-shaped light collimating portion 14, and dispersed by the light dispersing profile 13, formed on the light transmissive cover 10.

The light dispersing profile 13 may disperse all light collimated by the cup-shaped reflector 8 and the column-shaped light collimating portion 14. In an alternative configuration, the light dispersing profile 13 may be configured to disperse only a portion of the light that is collimated by the cup-shaped reflector 8 and/or colli - mated by the column-shaped light collimating portion 14.

In a light emission assembly 4 according to an exemplary embodiment of the in - vention, as it is depicted in Figures 3 and 4, no additional support elements are necessary for supporting the column-shaped light collimating portion 14 and/or the light dispersing profile 13. As a result, an exterior aircraft light 2 comprising a light emission assembly 4 according to an exemplary embodiment of the present invention may have less weight and may be assembled more easily than an exte - rior aircraft light according to previous approaches. Also, as compared to previous approaches, where additional support elements were used for supporting a colli - mating lens within the cup-shaped reflector, no detrimental effect on the light out - put is created by such additional support elements. The light blocking / light alter - ing effect of additional support elements may be eliminated. Since the spatial po - sitions of the column-shaped light collimating portion 14 and the light dispersing profile 13 with respect to the light source 6 and with respect to the cup-shaped re - flector 8 are well defined and fixed, an exterior aircraft light 2 according to an ex - emplary embodiment of the invention may provide a predefined light output in a particularly reliable manner, even when the exterior aircraft light 2 is subject to heavy movements / vibrations during its operation.

With the combination of the collimating action by the cup-shaped reflector 8 and by the column-shaped light collimating portion 14 and the dispersing action by the light dispersing profile 13, exterior aircraft lights according to exemplary embodi - ments may provide a high directivity / a high level of light concentration towards a target and at the same time provide some level of dispersion for evenly illuminat - ing a target region. Such exterior aircraft lights may be particularly well-suited for application scenarios, where a concrete, but somewhat extended target is to be il - luminated.

While the invention has been described with reference to exemplary embodi - ments, it will be understood by those skilled in the art that various changes may be made and equivalents may be substituted for elements thereof without depart - ing from the scope of the invention. In addition, many modifications may be made to adapt a particular situation or material to the teachings of the invention without departing from the essential scope thereof. Therefore, it is intended that the in - vention not be limited to the particular embodiment disclosed, but that the inven - tion will include all embodiments falling within the scope of the appended claims.

## Claims

1. Exterior aircraft light (2), comprising at least one light emission assembly (4) that includes:
at least one light source (6);
a cup-shaped reflector (8), wherein the at least one light source (6) is arranged at a bottom portion (8a) of the cup-shaped reflector (8) and wherein a light output opening (9) is provided at a top portion (8b) of the cup-shaped reflector (8); and
a light transmissive cover (10) for the cup-shaped reflector (8), wherein the light transmissive cover (10) comprises:
a lid portion (12), extending across the light output opening (9) of the cup-shaped reflector (8); and
a column-shaped light collimating portion (14), extending from the lid portion (12) into the cup-shaped reflector (8) towards the at least on light source (6) and comprising a light collimation surface (19) facing the at least one light source (6);
wherein the lid portion (12) comprises, on at least one side thereof, a light dispersing profile (13); and
wherein an exterior aircraft light output of the exterior aircraft light (2) comprises light, emitted by the at least one light source (6), collimated by the cup-shaped reflector (8) and the column-shaped light collimating portion (14), and dispersed by the light dispersing profile (13).

2. Exterior aircraft light (2) according to claim 1, wherein the cup-shaped reflector (8) comprises:
a support portion (16) for supporting the at least one light source (6); and
a peripheral wall (18), which extends around the support portion (16) and which is at least partially reflective for reflecting light emitted by the at least one light source (6).

3. Exterior aircraft light (2) according to any of the preceding claims, wherein the lid portion (12) of the light transmissive cover (10) comprises an undercut for accommodating a peripheral edge (8c) of the cup-shaped reflector (8) for attaching the light transmissive cover (10) to the cup-shaped reflector (8).

4. Exterior aircraft light (2) according to claim 3, wherein the peripheral edge (8c) of the cup-shaped reflector (8) extends circumferentially around the light output opening (9) of the cup-shaped reflector (8) and wherein the undercut extends circumferentially around the lid portion (12) of the light transmissive cover (10).

5. Exterior aircraft light (2) according to any of the preceding claims, wherein the cup-shaped reflector (8) and the column-shaped light collimating portion (14) of the light transmissive cover (10) have rotational symmetry, in particular full rotational symmetry, with respect to a central axis (A).

6. Exterior aircraft light (2) according to any of the preceding claims,
wherein the at least one light source (6) is a single light source (6), wherein the single light source (6) is in particular arranged on a central axis (A) of the cup-shaped reflector (8), or
wherein the at least one light source (6) comprises a plurality of light sources (6), wherein the plurality of light sources (6) are in particular arranged in a configuration that has rotational symmetry, in particular an n-fold rotational symmetry, with respect to a central axis (A) of the cup-shaped reflector (8).

7. Exterior aircraft light (2) according to any of the preceding claims, wherein the light dispersing profile (13) of the lid portion (12) of the light transmissive cover (10) is a corrugated surface, wherein the corrugated surface is in particular formed on an outside of the lid portion (12) facing away from the at least one light source (6).

8. Exterior aircraft light (2) according to claim 7, wherein the corrugated surface comprises a plurality of grooves (17a) and/or a plurality of ribs (17b), wherein the plurality of grooves (17a) and/or the plurality of ribs (17b) in particular extend side-by-side across the lid portion (12) of the light transmissive cover (10).

9. Exterior aircraft light (2) according to claim 8, wherein the plurality of grooves (17a) and/or the plurality of ribs (17b) have cylindrical shapes, wherein the cylindrical shapes in particular have a radius in the range of between 1 mm and 5 mm, further in particular a radius in the range of between 2 mm and 4 mm, yet further in particular a radius of about 3 mm.

10. Exterior aircraft light (2) according to any of the preceding claims,
wherein the light transmissive cover (10) is made of an elastic material; and/or
wherein the light transmissive cover (10) is made of a plastics material or of a rubber material, wherein the light transmissive cover (10) is in particular made of silicone.

11. Exterior aircraft light (2) according to any of the preceding claims, wherein the at least one light emission assembly (4) is a plurality of light emission assemblies (4), wherein the plurality of light emission assemblies (4) are in particular seven light emission assemblies (4) and/or wherein the plurality of light emission assemblies (4) are in particular arranged in a honeycomb configuration.

12. Exterior aircraft light (2) according to any of the preceding claims, wherein the exterior aircraft light (2) is a take-off light (124), a landing light (122), a taxi light (126), a runway turn-off light (114), a wing scan light (110), an engine scan light (112), a logo light (108), a cargo loading light (116) or a multi-functional light, which combines the functionalities of at least two of a take-off light (124), a landing light (122), a taxi light (126), a runway turn-off light (114), a wing scan light (110), an engine scan light (112), a logo light (108) and a cargo loading light (116).

13. Aircraft (102), such as an airplane or a helicopter, comprising at least one exterior aircraft light (2) according to any of the preceding claims.

14. Method of manufacturing a light emission assembly (4) of an exterior aircraft light (2), wherein the method comprises:
arranging at least one light source (6) in a cup-shaped reflector (8), so that the at least one light source (6) is arranged at a bottom portion of the cup-shaped reflector (8) and a light output opening (9) is provided at a top portion of the cup-shaped reflector (8); and
attaching a light transmissive cover (10) to the cup-shaped reflector (8), with a lid portion (12) of the light transmissive cover (10) extending across the light output opening (9) of the cup-shaped reflector (8), wherein the light transmissive cover (10) comprises a column-shaped light collimating portion (14), extending from the lid portion (12) into the cup-shaped reflector (8) towards the at least one light source (6) and comprising a light collimation surface (19) that faces the at least one light source (6), and wherein the lid portion (12) comprises, on at least one side thereof, a light dispersing profile (13), such that an exterior aircraft light output of the exterior aircraft light (2) comprises light, emitted by the at least one light source (6), collimated by the cup-shaped reflector (8) and the column-shaped light collimating portion (14), and dispersed by the light dispersing profile (13).

15. Method according to claim 14, wherein the method includes introducing a peripheral edge (8c) of the cup-shaped reflector (8) into a matching undercut formed at the lid portion (12) of the light transmissive cover (10); wherein the undercut is in particular formed circumferentially around the lid portion (12) of the light transmissive cover (10).
